# EUROPÄISCHE PATENTSCHRIFT

(11) **EP 1 081 845 B1**
(45) Veröffentlichungstag und Bekanntmachung des Hinweises auf die Patenterteilung: **26.12.2007**
(21) Anmeldenummer: 00116555.4
(22) Anmeldetag: 01.08.2000
(51) Int. Cl.: H02P 21/00, G01K 5/52

(54) **Steuer- und Regelverfahren für einen Elektromotor und entsprechende Vorrichtung**
Method for controlling an electrical motor and corresponding device
Méthode de commande pour un moteur électrique et dispositif correspondant

(30) Priorität: 03.09.1999 DE 19942205
(43) Veröffentlichungstag der Anmeldung: 07.03.2001
(73) Patentinhaber: Sew-Eurodrive GmbH & Co. KG, 76646 Bruchsal (DE)
(72) Erfinder: Tüngler, Eberhard, Dr., 76646 Bruchsal (DE)

(56) Entgegenhaltungen:
- WO-A-93/13495
- DE-A- 3 144 174
- DE-A- 19 734 405
- DE-A- 19 900 847
- SCHOLL ET AL: "WIRELESS PASSIVE SAW SENSOR SYSTEMS FOR INDUSTRIAL AND DOMESTIC APPLICATIONS" PROCEEDINGS OF THE 1998 IEEE INTERNATIONAL FREQUENCY CONTROL SYMPOSIUM. PASADENA, CA, MAY 27 - 29, 1998, IEEE INTERNATIONAL FREQUENCY CONTROL SYMPOSIUM, NEW YORK, NY: IEEE, US, Bd. CONF. 52, 27. Mai 1998 (1998-05-27), Seiten 595-601, XP000847119 ISBN: 0-7803-4374-3
- OSTERMAYER G ET AL: "CDMA for wireless SAW sensor applications" SPREAD SPECTRUM TECHNIQUES AND APPLICATIONS PROCEEDINGS, 1996., IEEE 4TH INTERNATIONAL SYMPOSIUM ON MAINZ, GERMANY 22-25 SEPT. 1996, NEW YORK, NY, USA,IEEE, US, 22. September 1996 (1996-09-22), Seiten 795-799, XP010208694 ISBN: 0-7803-3567-8
- HASEBE M.: 'HIGHLY EFFICIENT ELECTRIC VEHICLE DRIVE SYSTEM', 13. Oktober 1996 (1996-10-13) XP000688973

## Beschreibung

Die Erfindung betrifft ein Steuer- und Regelverfahren für einen Elektromotor und eine Vorrichtung zum Steuern und Regeln eines Elektromotors.

Aus den Veröffentlichungen MOVIDRIVE der Firma SEW-EURODRIVE GmbH & Co, die aus der Internetseite http://www.sew-eurodrive.de/german/frame_d.htm (Technische Dokumentation) zum Download zur Verfügung steht, sind Umrichter bekannt, die einen Gleichrichtereinheit, einen Zwischenkreis eine Endstufe und eine Steuereinheit umfassen. Dabei ist bei vielen Umrichtern, die nach einem Verfahren der feldorientierten Regelung arbeiten, an den Elektromotor ein Geber zur Messung der Drehzahl anmontiert. Ebenfalls kann statt eines Gebers zur relativen Winkellagenerfassung auch ein Geber zur absoluten Winkellagenerfassung anmontiert sein, wodurch dann auch hochgenaue Positionieraufgaben lösbar sind. In jedem Fall ist der Geber mit der Motorwelle mechanisch, und mit dem Umrichter, insbesondere dessen Steuereinheit, elektrisch verbunden. Darüber hinaus wird mit Messmitteln zur Messung des Motorstroms ein Wert für den Motorstrom zumindest näherungsweise erfasst. Es ist bekannt, den Motorstrom in zwei der drei Phasen eines Drehstrom-Motors zu erfassen. Daraus wird dann ein Istwert des Stromvektors gebildet, der von einem Steuer- und Regelverfahren in der Steuereinheit des Umrichters verwendet wird.

Solche Steuer- und Regelverfahren sind sehr komplex und umfangreich. Insbesondere enthalten sie Motorparameter, wie Streuinduktivität, Widerstand des Rotors, Induktivität des Rotors oder dergleichen, die teilweise temperaturabhängig sind, wie insbesondere der Widerstand des Rotors. Daher werden in mathematischen Modellen aus den direkten Messwerten, wie Motorstrom, Zwischenkreisspannung oder dergleichen, Werte für die Temperatur von solchen Motorparametern bestimmt. Insbesondere wird ein Modell für die Temperatur des Rotorwiderstands erstellt. Während des Betriebs wird aus der Temperatur des Rotorwiderstands auf den Widerstandswert des Rotors geschlossen, da die Materialeigenschaften als bekannt vorausgesetzt werden.

Allerdings sind diese Modelle mit vielen Unsicherheiten, Fehlerquellen und von der Wirklichkeit abweichenden und/oder idealisierenden Annahmen versehen oder aus solchen abgeleitet. Daher stimmt die berechnete Temperatur mit dem wahren physikalischen Wert nur ungefähr überein. Insbesondere sind Anwendungen bekannt, bei denen 2 Elektromotoren an eine mechanische Last angekoppelt sind, beispielsweise Extrudermaschinen. Dabei soll jeder Elektromotor einen bestimmten Anteil am Drehmoment aufbringen. Jedoch weisen beim Anschalten der Anlage oder anderen Betriebsbedingungen die Elektromotoren unterschiedliche Temperaturen auf, wodurch auch ein jeweils unterschiedliches Drehmoment bestimmt und eingestellt wird. Dies kann sich störend auf die Produktion auswirken und den Einsatz kostspieligerer Lösungen, beispielsweise mechanischer Lösungen, erfordern.

Die Steuereinheit weist darüber hinaus eine wichtige Regelstruktur auf, die einen Wert für ein Drehmoment des Motors modelliert. Dabei wird dieser Wert als Funktion von aus Motorstrom-Messwerten abgeleiteten Stromgrößen und Widerstand des Rotors bestimmt. Da letzterer aber mit den geschilderten Ungenauigkeiten behaftet ist, ist auch das Drehmoment mit entsprechenden Ungenauigkeiten behaftet. Daher ist ein solcher Umrichter für Aufgaben ungeeignet, die exakt oder möglichst genau einstellbare Werte des Drehmoments erfordern.

Darüber hinaus sind auch Aufgaben bekannt, bei denen Motoren einem Sprung des Sollwerts des Drehmoments möglichst gut folgen sollen. D.h., dass die Regelung des Drehmomentmesswertes eine hohe Dynamik aufweisen soll. Auch für solche Aufgaben sind oben beschriebene Umrichter wiederum wegen der geschilderten Ungenauigkeiten ungeeignet.

Aus der Veröffentlichung Scholl et al: Wireless passive SAW sensor systems for industrial and domestic applications' der IEEE International Frequency Control Symposium 1998, Pasadena, California. May 27 - 29, 1998, IEE, US, Bd. Conf.52,27.Mai 1998, Seiten 595-601 , XP000847119 ISBN:0-78034374-3 und der Siemens-Zeitschrift Special FuE, Frühjahr 1994 und dem Artikel 'Wireless passive SAW sensor systems for industrial and domestic applications' der IEEE International Frequency Control Symposium 1998, Pasadena, Califomia sind berührungslos arbeitende akustische OberflächenwellenSensoren bekannt. Dabei strahlt eine Radareinheit mittels einer ersten Antenne einen Hochfrequenzpuls elektromagnetischer Art ab. Die verwendeten Frequenzen liegen bei beispielhaft 433MHz, können aber auch von niedrigeren Frequenzen, wie 100MHz oder dergleichen, bis in den Bereich einiger GHz reichen. Das Sensorsystem weist eine zweite Antenne auf, die den Hochfrequenzpuls empfängt und an einen mindestens teilweise piezoelektrischen Körper weiterleitet, der sich dann unter der Wirkung der hochfrequenten Spannung dehnt und zusammenzieht. Somit startet eine akustische Oberflächenwelle, die als mechanische Welle in verschiedenen Modi ausgeprägt sein kann, insbesondere Scherwellen, Rayleighwellen, oder dergleichen. Diese läuft bis zu auf dem Körper angebrachten Reflektoren, die die akustischen Oberflächenwellen mindestens teilweise reflektieren. Die Geschwindigkeit der Oberflächenwellen ist abhängig von den physikalischen Parametern oder Größen am Körper, wie Temperatur, Druck, Zug- oder Scherkraftfeldern oder dergleichen. Die reflektierten Anteile laufen dann wiederum zum piezoelektrischen Wandler und werden über die zweite Antenne als elektromagnetische Strahlung abgestrahlt. Von dieser Strahlung empfängt wiederum die erste Antenne einen Anteil. Insbesondere ist die Zeitdauer bis zu dem somit entstandenen Echo ein Maß für physikalische Parameter oder Größen auf dem Körper. Falls nur die Temperatur des Körpers verändert wird, ist somit das gesamte System als Sensorsystem zur Temperaturmessung auf dem Körper verwendbar. Ebenfalls können solche Sensorsysteme bei geeigneter Auslegung und Gestaltung zur Drehmomentmesssung verwendet werden

Auf Seite 5 der zuletzt genannten Schrift ist eine Messung beschrieben worden, bei welcher die Temperatur auf dem Rotor eines Asynchronmotors mittels des beschriebenen Sensorsystems gemessen wird und mit der Messung mittels eines anderen Temperatur-Messgeräts verglichen wird. Dabei wird eine ungefähre Übereinstimmung festgestellt. In dem entsprechenden Laboraufbau wird dort auch das Drehmoment mittels Torsion vermessen, Insbesondere werden die Messwerte nur zu wissenschaftlichen Zwecken verwendet. Dabei bestand die Aufgabe und das Ziel darin, einen Vergleich von Temperatur- und Drehmomentverläufen gemeinsam bei unterschiedlichen Messverfahren durchzuführen. Als Lösung und Ergebnis dieser Aufgabe wurde eine grobe Übereinstimmung der Messdaten beobachtet, wobei bei genauer Beobachtung gewisse Abweichungen beobachtbar waren

Aus der DE 31 44 174 A1 ist eine feldorientierte Regelung einer Drehfeldmaschine bekannt.

Aus der WO 93 13495 A ist ein Oberflächenwellensensor bekannt, der drahtlos abfragbar ist.

Aus der DE 199 00 847 A1 ist ein neuronales Netz bekannt für ein Antriebssystem, umfassend Getriebemotor.

Aus der DE 197 34 405 A1 ist ein Umrichter-Elektromotor bekannt, wobei die Bremsspule der Bremse des Elektromotors zur Abfuhr von generatorisch erzeugter Energie des Elektromotors verwendet wird.

Aus der Veröffentlichung HASEBE M: ,Highly Efficient Elektric vehicle drive system', 13. Oktober 1996 ist bekannt, zwischen Motor-Innenraum und Getriebeinnenraum einen Durchlass für Öl vorzusehen.

Der Erfindung liegt die Aufgabe zugrunde, ein Steuerverfahren für einen Umrichter zur feldorientierten Regelung eines Elektromotors und einen Umrichter zur feldorientierten Regelung eines Elektromotors weiterzubilden unter Vermeidung der vorgenannten Nachteile. Insbesondere soll das Steuer- und Regelverfahren eine möglichst genaue Einstellung einer Größe ermöglichen und auch die Regeldynamik in bezug auf diese Größe verbessern. Dabei soll diese Größe dem vorgegebenen Sollwerte-Verlauf, insbesondere einem Sprung, genauer folgen.

Erfindungsgemäß wird die Aufgabe bei einem Steuerverfahren für einen Umrichter zur feldorientierten Regelung eines Elektromotors gelöst nach den in Anspruch 1 angegebenen Merkmalen und bei einem Umrichter zur feldorientierten Regelung eines Elektromotors gelöst nach den in Anspruch 13 angegebenen Merkmalen.

Dabei ist unter der Wendung 'anmontierbar' auch die Möglichkeit des Anmontierens eines Getriebes unter Verwendung von Adaptern oder anderen Mitteln zu verstehen. Ein solcher Adapter kann beispielsweise eine Schnittstelle zwischen genormtem IEC-Motor und firmeneigenem SEW-Motor darstellen. Beispielhaft ist ein solcher Adapter in der DE 196 37 361 C2 gezeigt.

Ein wichtiges Merkmal der Erfindung bei einem Steuerverfahren ist, dass an einem drehenden Teil, insbesondere Rotor, Welle, Zahnrad oder Reibrad, zumindest eine physikalische Größe, wie Temperatur, Drehmoment, Torsion oder dergleichen, gemessen wird und dieser Messwert von der Steuereinheit beim Steuern des Motors verwendet wird und/oder über ein Bussystem an mindestens einen weiteren Busteilnehmer derart übermittelbar ist, dass er von diesem in einem Steuer- und/oder Regelverfahren für eine Vorrichtung, also auch zum Auslösen von Aktionen, verwendet wird, und dass zur Messung von zumindest einer physikalischen Größe, insbesondere des Motors, des Getriebes, des Winkellagengebers oder der Bremse, ein Verfahren verwendet wird, das von der jeweiligen entsprechenden physikalischen Größe abhängige Eigenschaften akustischer Oberflächenwellen, insbesondere Scherwellen, Rayleighwellen, skalare Wellen oder dergleichen von 100 MHz bis 100 GHz, ausnutzt oder verwendet.

Wesentlicher Vorteil ist dabei, dass berührungsfrei Messwerte erfassbar sind und die verwendeten Sensoren in Massenproduktion kostengünstig fertigbar sind. Außerdem werden die Messwerte direkt am drehenden Teil erfasst. Dies hat den Vorteil, dass keine indirekte Messung durchgeführt wird oder weitere zwischengekoppelte Messsysteme verwendet werden müssen. Insbesondere die Temperatur, Torsion oder Drehmoment werden fast direkt im Enstehungsort gemessen. Somit ist der Messwert im Wesentlichen unverfälscht. Die Möglichkeit der Übermittlung der Messwert oder entsprechender Größen per Bussystem hat zum Vorteil, dass andere Busteilnehmer, insbesondere auch ein Zentralrechner des Bussystems messwertabhängig Aktionen auslösen können, wie eine Notabschaltung oder ein geregeltes Herunterfahren der gesamten Anlage oder Maschine. Je nach ausgewähltem Einsatzort des Sensors oder der Sensoren sind verschiedene Aktionen ausführbar. Beispielsweise kann eine starke Änderung des Drehmomentes auf einen Wellenabriss deuten und ein Notaus für die ganze Anlage zur Folge haben. Wenn hingegen das Bremsmoment des Bremsrotors der Bremse zu klein ist, obwohl die Bremse voll angesteuert wurde, ist unter Umständen ein Umrichtergesteuertes Abbremsen mit dem Motor möglich oder ein geregeltes Herunterfahren der gesamten Maschine. Wesentlicher Vorteil der Erfindung ist darüber hinaus, dass physikalische Größen, die direkt die Parameter des Motors beeinflussen, erfassbar sind, wie insbesondere die Temperatur des Kurzschlusskäfigs des Rotors. Aus der Temperatur lässt sich zusammen mit dem Wissen über das Material der elektrische Widerstand bestimmen. Dieser Wert geht in die Motorgleichungen für die Modellierung des Motors direkt ein. Dabei werden die Motorgleichungen vom Steuer- und Regelverfahren der Steuereinheit des Umrichters verwendet. Durch die Kenntnis des Widerstandes des Rotors wird somit das Steuer- und Regelverfahren verbessert, weil ja sozusagen der Motor genauer beschrieben ist als ohne die Kenntnis der physikalischen Größen. Daraus folgen dann weitere Vorteile wie bessere Regelgüte, ein schnelleres und besseres Folgen der Sollwert-Vorgabe und insbesondere auch ein verbesserter Einschwingvorgang nach einem sprunghaften Verlauf der Sollwert-Größen. Beispielsweise wird bei einem Sprung des Sollwerts des Drehmoments der Rotorstrom stark verändert. Daher ändert sich auch die Temperatur des Rotors mit einer gewissen Zeitverzögerung. Mit der erfindungsgemäßen Erfassung und Verwendung der Messwerte physikalischer Größen auf dem Rotor ist das Steuer- und Regelverfahren nun in der Lage, die Werte dieser Größen direkt zu verwenden und daher optimal den Motor zu steuern und regeln, also eine hohe Regeldynamik aufzuweisen.

Die Verwendung von Oberflächenwellen zur Erfassung der physikalischen Größen hat den weiteren Vorteil, dass die Oberflächenwellen direkt an den zu messenden Bereich ankoppeln und somit sofort in ihren Eigenschaften, wie Geschwindigkeiten oder dergleichen, verändert werden, die dann ja nach Übertragung ausmessbar sind. Somit steht ein direkt aufgenommener Messwert praktisch ohne Zeitverzögerung zur Verfügung.

Bei einer vorteilhaften Ausgestaltung werden die Informationen über die aufgenommenen Messwerte in elektromagnetische Wellen codiert oder gewandelt und umgekehrt. Dadurch können vorteilhafterweise die Informationen über die aufgenommenen Messwerte mit Lichtgeschwindigkeit auch über erhebliche Entfernungen übertragen werden. Außerdem ist ein weiterer Vorteil, dass zwischen Messwert-verarbeitender Elektronik und Messwertaufnehmender Vorrichtung keine Drahtverbindung bestehen muss. Somit ist sogar eine berührungslose Übertragung der Messinformationen möglich.

Bei einer vorteilhaften Ausgestaltung werden die Oberflächenwellen direkt in elektromagnetische Wellen gewandelt. Von Vorteil ist dabei, dass keine weiteren Mittel notwendig sind und daher ein einfaches, schnelles und kostengünstiges Verfahren und/oder Mittel zur Messwertwandlung verwendet wird. Insbesondere können bei einer vorteilhaften Ausgestaltung die Frequenz oder die Grundfrequenz der Oberflächenwellen und der elektromagnetischen Wellen, insbesondere Radarwellen, gleich sein. Dadurch ist ein besonders einfaches und kostengünstiges Verfahren zur Umwandlung einsetzbar, insbesondere durch Anwendung des Piezoeffektes.

Bei weiteren vorteilhaften Ausgestaltungen werden Temperaturmesswerte an drehenden Teilen, wie Rotor des Motors, Kurzschlusskäfig, eintreibende oder abtreibende Welle eines Getriebes oder einer Getriebestufe, Zahnrad einer Getriebestufe, Bremsrotor einer Bremse oder Belagträger einer Bremse erfasst. Abhängig von der Temperatur und Funktion des jeweiligen Teils kann eine Aktion ausgelöst werden. Dies kann durch den Umrichter geschehen oder durch einen über ein Bussystem verbundenen Busteilnehmer. Als Beispiele für solche Aktionen sind Notausschaltungen oder geregeltes Herunterfahren von Anlagen oder Maschinen zu nennen. Auch ist der Messwert vom weiteren Busteilnehmer oder Umrichter zur Regelung des Motors oder anderer Geräte verwendbar.

Insbesondere bei der Messung der Temperatur des Kurzschlusskäfigs können darüber hinaus noch weitere Vorteile erreicht werden. Eine wichtige Verwendung ist dabei, dass aus der Temperatur und der Kenntnis des Materials auf den Widerstand des Kurzschlusskäfigs geschlossen werden kann und somit für das Steuerverfahren der 'richtige' wahre Widerstandswert bestimmbar ist, also die Notwendigkeit eines aus Formeln hergeleiteten Modellwertes entfällt. Somit kennt das Steuerverfahren den Motor genau und wendet daher die Gleichungen zur Beschreibung des Motors, die sogenannten Motorgleichungen, mit den 'richtigen' Werten, insbesondere Temperaturwerten an. Daher ist eine besonders gute Steuerung und Regelung des Motors ausführbar. Dies macht sich dann in besonders guter Regelgüte, Regeldynamik und in der Ausregelung von Sollwertsprüngen, insbesondere Drehmoment-Sollwertsprüngen, bemerkbar. Dabei sind beispielsweise geringere Überschwinger und schnelleres Erreichen des neuen Sollwertes nach dem Sprung ermöglicht.

Weitere vorteilhafte Ausgestaltungen umfassen die Messwerterfassung der Temperatur an einem Verstellgetriebe. Unter der Wendung im Bereich des Reibkontaktes' ist eine hinreichend gute, derartige wärmetechnische Ankopplung an den Reibkontakt zu verstehen, dass durch die von der Vorrichtung 42 gemessene Temperatur auf die Temperatur mindestens geschlossen werden kann oder diese Temperaturen praktisch gleich sind. Da dort mechanische Reibung auftritt, ist die dadurch verursachte Temperatur erfindungsgemäß vorteilhafterweise messbar. Somit ist die Temperatur zur Regelung in einem Verfahren beispielhaft derart verwendbar, dass sie keinen kritischen Wert überschreitet oder Aktionen auslösbar sind. Insbesondere wenn das Getriebe aus irgendwelchen Gründen blockiert ist, kann der Motor ohne die erfindungsgemäßen Aktionen oder entsprechenden Regelungen durch Weiterdrehen eine solch hohe Temperatur, insbesondere mehr als 400°Celsius, erzeugen, dass der Laufring oder sogar der Reibkegel zerstört wird. Daher ist eine erfindungsgemäßes Steuerverfahren und eine entsprechende Vorrichtung vorteilhaft für die Betriebssicherheit, selbstverständlich besonders in explosionsgefährdeten Bereichen.

Weitere vorteilhafte Ausgestaltungen umfassen die Messwerterfassung des Drehmomentes an einer Welle, wie Rotor des Motors, Bremsrotor einer Bremse, Welle einer Getriebestufe oder eintreibende oder abtreibende Welle eines Getriebes oder einer Getriebestufe. Die Vorteile sind dabei in analoger Weise zum schon beschrieben Fall der Temperaturmessung zu sehen. Insbesondere können wiederum Aktionen ausgelöst werden, Warnungen ausgegeben werden und der Messwert vom Steuer- und Regelverfahren für den Motor verwendet werden. Im letztgenannten Fall ist vorteilhafterweise eine hervorragende Drehmomentenregelung ausführbar, da ja der Istwert des Drehmoments quasi direkt messbar ist und vom Steuer- und Regelverfahren des Umrichters verwendbar ist.

Bei vorteilhaften Ausgestaltungen, die die Messwerterfassung des Drehmomentes am Bremsrotor umfassen, sind vorteilhafterweise spezielle Verfahren anwendbar. Beispielhaft sei die Kontrolle der Funktion der Bremse, wie insbesondere auf Bremsversagen, genannt. In kritischen Fällen ist dann das Einleiten von Notmassnahmen ausführbar. Ebenso kann aber auch im regulären Betrieb ein Verfahren zur gesteuerten Bremswirkung ausgeführt werden. Insbesondere kann die Bremskraft einerseits vom Motor im generatorischen Betrieb und andererseits von der Bremse zumindest teilweise aufgebracht werden. Der jeweilige Anteil kann von einem Steuer- und Regelverfahren der Steuereinheit bestimmt werden und zeitabhängig gehalten werden.

Weitere vorteilhafte Ausgestaltungen ergeben sich aus den Unteransprüchen.

### Bezugszeichenliste

- 1: Netzspannung
- 2: Gleichrichtereinheit
- 3: Wechselrichter
- 4: Elektromotor
- 5: Steuereinheit
- 21: Anschlusskasten
- 22, 34: Rotorwelle
- 23: Gehäuse mit Stator
- 24: Geber
- 30: Bremse
- 31: Stator des Resolvers
- 32: Rotor des Resolvers
- 33: Hohlwelle des Resolvers
- 35: Statorwicklung
- 36: Kurzschlusskäfig des Rotors
- 37: Statorblechpaket
- 38: Anschlussleitung für Statorwicklung
- 39: Anschlussleitung für Resolver
- 41: Leitung von zweiter Antenne zu Elektronik
- 42: Vorrichtung mit erster Antenne und piezoelektrischem Wandler
- 43: zweite Antenne
- 301: Motoranschlusskasten

Die Erfindung wird nun anhand von einer Abbildung näher erläutert:

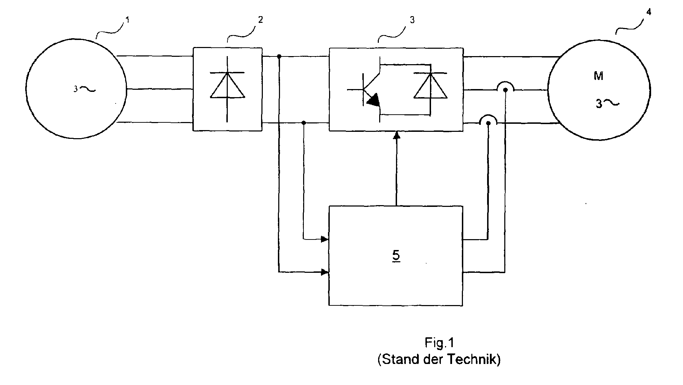

In der Figur 1 sind die elektrischen oder elektronischen Grundelemente einer erfindungsgemäßen Ausführungsform skizziert. Die Netzspannung 1 wird vom Gleichrichtereinheit 2 in eine Zwischenkreisspannung gleichgerichtet. Der Wechselrichter 3 wird aus dieser Zwischenkreisspannung versorgt und versorgt wiederum den Elektromotor 4 mit einer dreiphasigen Wechselspannung. Dabei misst die Steuereinheit 5 zwei Motorstromphasen und die Zwischenkreisspannung. Sie steuert und regelt dann den Motor mittels erfindungsgemäßer Reglerstrukturen, die aus den Messgrößen Werte für Größen wie Drehmoment oder dergleichen berechnet, wobei zur Ableitung der Formeln für diese Berechnung gewisse Modellannahmen gemacht werden. Insbesondere werden auch Werte für Temperaturen, insbesondere des Rotors abgeleitet, die daher also mit Fehlern behaftet sind.

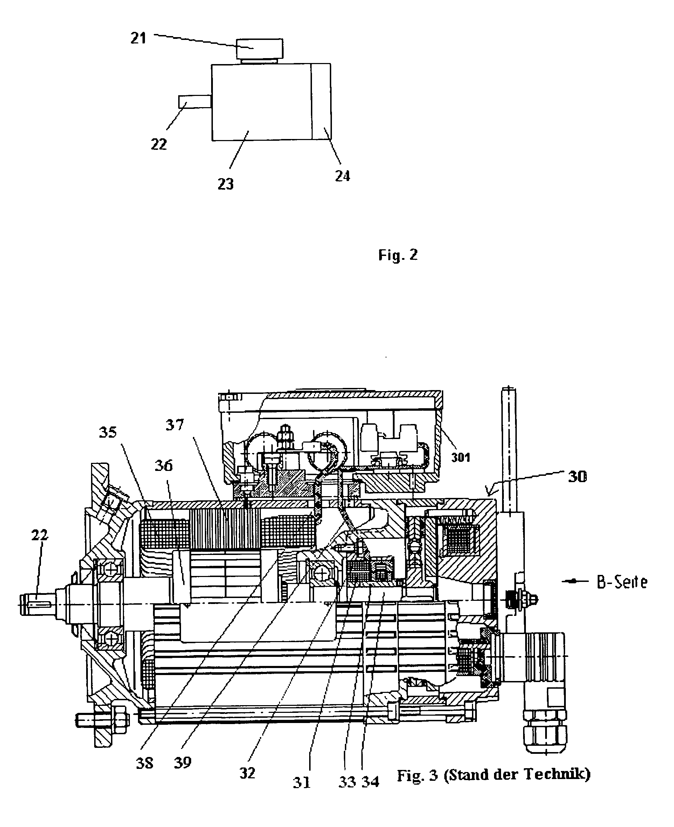

In der Figur 2 ist ein Motor einer erfindungsgemäßen Ausführungsform skizziert, der ein Gehäuse mit Stator 23 zeigt. Nur die aus dem Gehäuse 23 herausragenden Teile des Rotors 22 ist zu sehen. B-seitig ist am Gehäuse 23 ein Geber 24 angebaut. B-seitig ist in einem weiteren erfindungsgemäßen Ausführungsbeispiel noch eine Bremse anbaubar. Der Anschlusskasten 21 enthält die Anschlüsse für die Wicklung des Stators des Motors, für die mindestens eine Wicklung einer anbaubaren Bremse und für einen Resolver oder Winkellagengeber.

In der Figur 3 ist ein Motor gemäß Stand der Technik gezeigt. A-seitig ist ein Rotor 22, 34 zu erkennen, an den ein Getriebe anschließbar ist. Der Rotor 22, 34 trägt einen Kurzschlusskäfig 36, der von einem Statorblechpaket 37 umgeben ist. Die zu diesem gehörende Statorwicklung 35 ist ebenfalls skizziert. B-seitig ist an den Motor eine Bremse 30 angebaut. Der Rotor 34 trägt eine Hohlwelle des Resolvers 33, auf der der Rotor des Resolvers 32 anmontiert ist, der wiederum vom Stator des Resolvers 31 umgeben ist. Die Anschlussleitung für Statorwicklung 38 und die Anschlussleitung für den Resolver 39 führen vom Motorraum in den Motoranschlusskasten

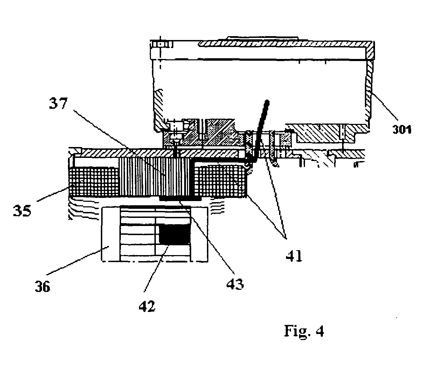

In der Figur 4 ist ein erfindungsgemäßes Ausführungbeispiel skizziert. Der Kurzschlusskäfig 36 trägt eine Vorrichtung 42 mit erster Antenne und piezoelektrischem Wandler. Am Statorblechpaket ist nichtdrehend eine zweite Antenne 43 angebracht, die eine Leitung von zweiter Antenne zu Elektronik 41 aufweist und somit mit einer Radareinheit oder einem Hochfrequenzpulsgenerator verbindbar ist. Der Hochfrequenzpulsgenerator generiert eine zeitliche Folge von Hochfrequenzpulsen, die mittels der zweiten Antenne 43 in elektromagnetische Wellen gewandelt und in den Motorinnenraum abgestrahlt werden. Die verwendeten Frequenzen betragen im Wesentlichen 433MHz. In weiteren Ausführungsbeispielen werden aber auch andere Frequenzen verwendet.

Die Vorrichtung 42 mit erster Antenne und piezoelektrischem Wandler empfängt den Hochfrequenzpuls und leitet ihn an einen mindestens teilweise piezoelektrischen Körper weiter, der sich dann unter der Wirkung der hochfrequenten Spannung dehnt und zusammenzieht. Somit startet auf einer Fläche der Vorrichtung 42, insbesondere deren Grundplatte, eine akustische Oberflächenwelle, die als mechanische Welle in verschiedenen Modi ausgeprägt sein kann, insbesondere Scherwellen, Rayleighwellen, oder dergleichen. Diese läuft bis zu auf dem Körper angebrachten Reflektoren, die die akustischen Oberflächenwellen mindestens teilweise reflektieren. Die Geschwindigkeit der Oberflächenwellen ist dabei abhängig von der Temperatur dieser Fläche. In der erfindungsgemäßen Ausführungsform ist die Fläche wärmeleitend mit dem Rotor mit einem niedrigen Wärmeleitungsübergangswiderstand verbunden. Daher ist die Temperatur der Fläche, die dann auch auf die Geschwindigkeit der Oberflächenwellen wirkt, im Wesentlichen der Temperatur des Rotors bzw dessen Kurzschlusskäfig gleich

Die an den Reflektoren zurückgeworfenen oder reflektierten Anteile laufen auf der Fläche bis zum piezoelektrischen Wandler und werden über die erste Antenne als elektromagnetische Strahlung abgestrahlt. Von dieser Strahlung empfängt wiederum die zweite Antenne einen Anteil, der an die verbundene Elektronik zur Auswertung weitergeleitet wird. Die Zeitdauer bis zu dem somit entstandenen Echo ist ein Maß für die Temperatur der Fläche oder des Kurzschlusskäfigs.

Der auf diese Weise berührungsfrei gemessene Temperaturwert wird nun der Umrichterelektronik zur Verfügung gestellt und beim Steuern und Regeln in den verwendeteten Steuer- und Regelverfahren verwendet. Motorparameter, wie Streuinduktivität, Widerstand des Rotors, Induktivität des Rotors oder dergleichen, oder deren Modellwert sind teilweise wesentlich temperaturabhängig und können mit der erfindungsgemäß bestimmten Temperatur ständig aktualisiert bestimmt werden. Besonders der elektrische Widerstand des Rotors ist eine wesentliche Größe für die Steuerung und Regelung, da er in den Motorgleichungen vorkommt, also den physikalischen Grundgleichungen, die den Motor beschreiben. Mit der erfindungsgemäß bestimmten Temperatur und der Kenntnis der Materialeigenschaften lässt sich der elektrische Widerstand des Rotors sehr genau bestimmen und ständig aktualisieren. Daher ist das Steuer- und Regelverfahren genauer und kann insbesondere den Drehmoment-Sollverlauf besser regeln. Beispielsweise bei einer Vorgabe eines plötzlich zunehmenden Drehmomentes von einem kleinen auf eine großen Wert nimmt der Strom im Kurzschlusskäfig stark zu. Dadurch ändert sich mit Zeitverzögerung die Temperatur in starkem Ausmaß. Durch die Information des Temperaturwertes des Kurzschlusskäfigs ist ein genaues Regeln möglich, da der Widerstand des Rotors dem Steuer- und Regelverfahren nun erfindungsgemäß bekannt ist.

In einem weiteren erfindungsgemäßen Ausführungsbeispiel ist auch das Einleiten von Maßnahmen, wie Notabschaltung, Informieren einer über Feldbus angeschlossenen zentralen Anlagensteuerung oder dergleichen, möglich.

In einem weiteren erfindungsgemäßen Ausführungsbeispiel wird die Vorrichtung mit erster Antenne und piezoelektrischem Wandler 42 nicht, wie in den Figuren gezeigt, auf dem Kurzschlusskäfig montiert, sondern auf der Rotorwelle 22, 34. Die Vorrichtung 42 ist dabei modifiziert derart ausgeführt und auf dem Rotor derart befestigt, dass Torsion infolge der Dehnungsunterschiede und daraus resultierender Verformungen messbar ist. Somit ist also ein dem Drehmoment entsprechender Wert messbar. Dieser Wert wird von der Steuereinheit zur Steuerung des Umrichters verwendet. Da dabei der direkt mit dem Drehmoment zusammenhängende Wert bzw. das Drehmoment selbst erfasst wird, kann das Steuer- und Regelverfahren der Steuereinheit ideal auf den gegebenen Sollwert des Drehmomentes steuern.

In einem weiteren erfindungsgemäßen Ausführungsbeispiel ist auch das Einleiten von Maßnahmen analog den oben schon erwähnten ausführbar, wenn das Drehmoment sehr kleine und/oder sehr große Werte oder einen kritischen Wert erreicht. Ebenso ist bei einer großen Änderungsgeschwindigkeit das Auslösen einer Warnung möglich. All diese genannten Maßnahmen oder Aktionen sind einerseits vom Umrichter oder der Steuereinheit ausführbar, andererseits auch bei Vorhandensein eines Feldbusanschlusses durch andere Busteilnehmer. Diese anderen Busteilnehmer können beispielsweise auch weitere Umrichter sein, die dann wiederum gemäß den übermittelten Werten für Drehmoment Aktionen auslösen oder entsprechend steuern und regeln.

In weiteren erfindungsgemäßen Ausführungsbeispielen wird die Vorrichtung mit erster Antenne und piezoelektrischem Wandler 42 zur Messung mehrerer physikalischer Größen verwendet. In weiteren erfindungsgemäßen Ausführungsbeispielen werden also Temperatur- und Drehmomentmesswerte erfasst. Dabei wird der Aufbau mit Reflektoren geeignet ausgeführt und die Pulsfolge bzw. Frequenz der Hochfrequenzpulse geeignet gewählt.

In einem weiteren erfindungsgemäßen Ausführungsbeispiel wird die Vorrichtung mit erster Antenne und piezoelektrischem Wandler 42 am beweglichen Teil, wie Bremsrotor oder dergleichen, oder Belagträger einer am Motor B-seitig angebrachten Bremse montiert. Somit ist die Messung der Temperatur des beweglichen Teils und/oder die Messung des Bremsmomentes berührungsfrei messbar. Diese Werte werden dem Umrichter oder einem über Feldbus verbundenen Busteilnehmer, wie Zentralrechner oder dergleichen, übergeben und von diesem zum Steuern und Regeln verwendet. Beispielsweise werden bei Überschreiten einer Temperatur Aktionen ausgelöst, wie Warnungen oder Notabschaltungen oder dergleichen. Auch eine Kontrolle des Bremsmomentes oder Auslösung von Aktionen bei Erreichen kritischer, sehr kleiner oder zu großer Werte sind ausführbar.

In einem weiteren erfindungsgemäßen Ausführungsbeispiel wird die Vorrichtung mit erster Antenne und piezoelektrischem Wandler 42 an einem beweglichen Teil des A-seitig anmontierten Getriebes mit Zahnrädern oder Kegelrädern anmontiert. Somit wird in der beschriebenen Weise analogen Art das Auslösen von Aktionen ausführbar, wenn beispielsweise die Temperatur der Zähne eines Zahnrades einen kritischen Wert überschreitet. Aber auch niedrige Temperaturen werden von der Steuereinheit oder einem über Feldbus angeschlossenen Busteilnehmer zum Steuern und Regeln verwendet. Beispielsweise ist die Viskosität des Schmierstoffes stark temperaturabhängig, insbesondere bei Fließfett, das sogar einen Phasenübergang aufweist. Somit ändern sich die Schmiereigenschaften der ineinander eingreifenden Verzahnungen mit der Temperatur erheblich. Dabei ist die Leitung von zweiter Antenne zu Elektronik 41 vom Umrichter durch einen Durchlass ins Getriebeinnere verlegt.

In einem weiteren erfindungsgemäßen Ausführungsbeispiel ist die Leitung von zweiter Antenne zu Elektronik 41 vom Umrichter durch einen Durchlass in den Motor-Innenraum gemäß Figur 4 verlegt und ein Durchlass vom Motor-Innenraum in den Innenraum des Getriebes derart angebracht, dass die Radarwellen vom Motor-Innenraum in den Innenraum des Getriebes sich ausbreiten können. Der Durchlass kann dabei als eine serienmäßig vorhandene Bohrung ausgeführt sein. Somit sind mehrere Größen mit einer einzigen zweiten Antenne 43 messbar, sogar aus Motor und Getriebe.

In einem weiteren erfindungsgemäßen Ausführungsbeispiel wird statt der erwähnten Bohrung ein bidirektionaler Radarwellen-Leiter, beispielsweise ein Hohlwellenleiter, zum Überleiten der Radarwellen vom Motor-Innenraum in den Innenraum des Getriebes verwendet.

In einem weiteren erfindungsgemäßen Ausführungsbeispiel ist am Elektromotor A-seitig ein Getriebe anmontiert, das mindestens eine Getriebestufe umfasst, die als ein Verstellgetriebe oder Reibradgetriebe ausgebildet ist, wobei diese Getriebestufe wenigstens zwei Getrieberäder, nämlich einen Reibkegel und einen mit diesem in Kontakt befindlichen Laufring, umfasst. Dabei wird in der schon beschriebenen Weise erfindungsgemäß ein Messwert für eine Temperatur mindestens zeitweise im Bereich des Reibkontaktes erfasst.

Dieser Messwert wird von der Steuereinheit des Umrichters zum Auslösen von Aktionen und/oder zum Steuern und Regeln verwendet. Beispielsweise wird die Drehzahl auf Null oder einen anderen Wert herabgesetzt. In einem weiteren erfindungsgemäßen Ausführungsbeispiel wird dieser Messwert über ein Bussystem an mindestens einen weiteren Busteilnehmer übermittelt. Insbesondere kann somit bei explosionsgefährdeten Anwendungen die Belastung des Getriebes von der Steuereinheit aus derart beeinflusst werden, dass kritische Temperaturen vermeidbar sind.

Ein beispielhaftes Verstellgetriebe ist aus der DE 43 31 944C2 bekannt. In einem weiteren erfindungsgemäßen Ausführungsbeispiel ist bei einem solchen Verstellgetriebe eine Vorrichtung 42 mit erster Antenne und piezoelektrischem Wandler an der vom Reibkontakt abgewandten Seite angebracht. Eine erfindungsgemäße Ausführung ist also, die Vorrichtung 42 an der dem Motor zugewandten Seite der Antriebsscheibe mit der Nummer 6 der Figur 1 der DE 43 31 944C2 anzumontieren. Die Antriebsscheibe ist gut wärmeleitend. Daher ist die Vorrichtung 42 wärmetechnisch hinreichend gut mit dem Wärme erzeugenden Reibkontakt gekoppelt Insbesondere wenn das Getriebe aus irgendwelchen Gründen blockiert ist, kann der Motor ohne die erfindungsgemäßen Aktionen oder entsprechenden Regelungen durch Weiterdrehen eine solch hohe Temperatur, insbesondere mehr als 400°Celsius, erzeugen, dass der Laufring oder sogar der Reibkegel zerstört wird. Die Erfindung umfasst aber Aktionen oder Regelungen, die rechtzeitig durch entsprechende Steuerung oder Regelung von Vorrichtungen dies im Vorfeld verhindern.

In einem weiteren erfindungsgemäßen Ausführungsbeispiel wird in analoger Weise das Abtriebs-Drehmoment der Abtriebswelle des an den Motor A-seitig anmontierten Getriebes ermittelt und der Wert der Steuereinheit oder einem Busteilnehmer zugeführt.

Bei allen beschriebenen erfindungsgemäßen Ausführungen ist die Erfassung der Messwerte nur zeitdiskret möglich. Dies ist allein schon vom Messprinzip her für den Fachmann klar. Allerdings ist die Wiederholfrequenz derart hoch wählbar, dass die Messwerte der Steuereinheit häufiger zur Verfügung gestellt werden können, als die Wiederhol-Rate der Berechnungen der Motorgleichungen der heute üblicherweise verwendeten Steuereinheiten für Umrichter.

In einem weiteren erfindungsgemäßen Ausführungsbeispiel ist die Elektronik zur Erzeugung und Auswertung der Hochfrequenz im Umrichter integriert.

In weiteren erfindungsgemäßen Ausführungsbeispielen werden mehrere Vorrichtungen 42 mit erster Antenne und piezoelektrischem Wandler gleichzeitig an verschiedenen drehenden Teilen des Motors, Getriebes oder der Bremse verwendet. Dabei werden die Signale oder jeweiligen Echos derart codiert, dass nur eine einzige zweite Antenne 43 ausreicht. Die Codierung ist durch entsprechende jeweilige Anordnung der Reflektoren auf der Fläche der jeweiligen Vorrichtungen 42 mit erster Antenne und piezoelektrischem Wandler erreichbar

## Patentansprüche

1. Steuer- und Regelverfahren für einen Elektromotor (4), der von einem Umrichter versorgt wird, welcher mit feldorientierter Regelung betrieben wird,
wobei der Umrichter eine Gleichrichtereinheit (2), einen Zwischenkreis eine Endstufe (3) und eine Steuereinheit (5) umfasst,
und wobei an den Elektromotor (4) ein relativ oder absolut messender Winkellagengeber (24) anmontiert ist,
wobei mindestens näherungsweise ein Motorstrom gemessen wird oder dem Motorstrom entsprechende Werte gemessen werden und von der Steuereinheit (5) verwendet werden,
wobei die Rotortemperatur des Elektromotors (4) bestimmt wird und von der Steuereinheit beim Steuern des Motors verwendet wird
wobei zur Regelung des Motors der Rotorwiderstand berücksichtigt wird, welcher aus der Rotortemperatur bestimmt wird,
wobei an den Elektromotor (4) ein eine Welle umfassendes Getriebe und/oder eine einen Bremsrotor umfassende Bremse anmontiert ist,
**dadurch gekennzeichnet, dass**
- die Rotortemperatur des Elektromotors (4) bestimmt wird mittels eines an diesem Rotor vorgesehenen, drahtlos abfragbaren Obertlächenwellensensors,
- ein erster Messwert für Temperatur, Drehmoment oder Torsion an einem beweglichen Teil des Getriebes, insbesondere Welle, gemessen wird mittels eines an der Welle vorgesehenen, drahtlos abfragbaren Oberflächenwellensensors, oder ein Messwert für Temperatur, Drehmoment oder Torsion an einem beweglichen Teil der Bremse, insbesondere an dem Bremsrotor, gemessen wird mittels eines am Bremsrotor vorgesehenen, drahtlos abfragbaren Oberflächenwellensensors,
- der erste Messwert von der Steuereinheit (5) beim Steuern des Motors verwendet wird zum Auslösen von Aktionen, wie Notausschaltung oder geregeltes Herunterfahren,
- wobei zum Empfangen der von den Oberflächenwellensensoren gesendeten elektromagnetischen Wellen nur eine gemeinsame Antenne vorgesehen ist,
und zwischen Motor-Innenraum und Getriebe-Innenraum ein Durchlass derart ausgeführt ist, dass die als Radarwellen vorgesehenen elektromagnetischen Wellen sich zwischen Motor-Innenraum und Getriebe-Innenraum ausbreiten können.

2. Steuer- und Regelverfahren nach Anspruch 1,
**dadurch gekennzeichnet, dass**
zur Übertragung der Information eines Messwerts der jeweiligen physikalischen Größe vom drehenden Teil zum stehenden Teil, wie Stator, Gehäuse, Lager, Anschlusskasten oder dergleichen, und zurück elektromagnetische Wellen verwendet werden.

3. Steuer- und Regelverfahren nach mindestens einem der vorangegangenen Ansprüche,
**dadurch gekennzeichnet, dass** der Messwert
über ein Bussystem an mindestens einen weiteren Busteilnehmer übermittelbar ist oder mindestens zeitweise übermittelt wird zur Auslösung von Aktionen oder Verwendung in Steuer- und Regelverfahren,
und/oder der Messwert vom weiteren Busteilnehmer zur Regelung des Motors oder anderer Geräte verwendet wird.

4. Steuer- und Regelverfahren nach mindestens einem der vorangegangenen Ansprüche,
**dadurch gekennzeichnet, dass**
im Bereich des drehenden Teils zeitweise elektromagnetische Strahlung mindestens mittelbar in akustische Oberflächenwellen gewandelt wird, und/oder zeitweise akustische Oberflächenwellen mindestens mittelbar in elektromagnetische Strahlung gewandelt werden.

5. Steuer und Regelverfahren nach mindestens einem der vorangegangenen Ansprüche,
**dadurch gekennzeichnet, dass**
die elektromagnetischen Wellen mindestens eine Frequenz, insbesondere Grundfrequenz oder Trägerfrequenz, mit den akustischen Oberflächenwellen gemeinsam aufweisen.

6. Steuer- und Regelverfahren nach mindestens einem der vorangegangenen Ansprüche,
**dadurch gekennzeichnet, dass**
auf dem oder am drehenden Teil ein Sensor oder eine Vorrichtung angebracht wird, der oder die zeitweise elektromagnetische Strahlung empfängt, in Oberflächenwellen wandelt, die Oberflächenwellen zumindest einmal reflektiert und zeitweise Oberflächenwellen mindestens mittelbar in elektromagnetische Strahlung wandelt, wobei die Oberflächenwellen temperaturabhängig unterschiedliche Eigenschaften, insbesondere temperaturabhängig Geschwindigkeiten, aufweisen.

7. Steuer- und Regelverfahren nach mindestens einem der vorangegangenen Ansprüche,
**dadurch gekennzeichnet, dass**
ein Messwert für eine Temperatur am Rotor, insbesondere im Bereich des Käfigs des Rotors des Asynchronmotors, erfasst wird und
aus dem Messwert der Temperatur auf den ohmschen Widerstand elektrischer Leiter des Rotors geschlossen wird und dieser Widerstand bei der Berechnung des Drehmomentes berücksichtigt wird, wobei auch Messwerte des Motorstromes berücksichtigt werden.

8. Steuer und Regelverfahren nach mindestens einem der vorangegangenen Ansprüche,
**dadurch gekennzeichnet, dass**
am Elektromotor A-seitig mindestens ein Getriebe anmontiert ist, das mindestens eine Getriebestufe umfasst, die als ein Verstellgetriebe oder Reibradgetriebe ausgebildet ist, wobei diese Getriebestufe wenigstens zwei Getrieberäder, insbesondere einen Reibkegel und einen mit diesem in Kontakt befindlichen Laufring, umfasst,
und dass ein Messwert für eine Temperatur am Getrieberad mindestens zeitweise im Bereich des Reibkontaktes erfasst wird,
und dass dieser Messwert bei der Steuerung und Regelung des Motors durch den Umrichter, insbesondere zur Herabsetzung der Drehzahl auf Null oder einen anderen Wert, verwendet wird und/oder dieser Messwert über ein Bussystem an mindestens einen weiteren Busteilnehmer übermittelbar ist oder zeitweise übermittelt wird zur Auslösung von Aktionen oder Verwendung in Steuer- und Regelverfahren.

9. Steuer- und Regelverfahren nach mindestens einem der Ansprüche 1 bis 6,
**dadurch gekennzeichnet, dass**
am Elektromotor (4) A-seitig mindestens ein Getriebe anmontiert ist, das mindestens eine Zahnräder umfassende Getriebestufe umfasst, insbesondere eine mindestens zwei Evolventen-Zahnräder umfassende Stirnradstufe oder eine mindestens ein Kegelrad umfassende Kegelradstufe,
und dass ein Messwert für eine Temperatur an einem Zahnrad mindestens zeitweise gemessen wird,
und dass dieser Messwert bei der Steuerung und Regelung des Motors durch den Umrichter, insbesondere zur Herabsetzung der Drehzahl auf Null oder einen anderen Wert, verwendet wird und/oder dieser Messwert über ein Bussystem an mindestens einen weiteren Busteilnehmer übermittelbar ist oder zeitweise übermittelt wird zur Auslösung von Aktionen oder Verwendung in Steuer- und Regelverfahren.

10. Steuer- und Regelverfahren nach mindestens einem der vorangegangenen Ansprüche,
**dadurch gekennzeichnet, dass**
am Elektromotor (4) A-seitig mindestens ein Getriebe anmontiert ist und/oder B-seitig eine elektromagnetisch betätigbare Bremse in den Elektromotor (4) integriert oder an ihn anmontiert ist,
und dass ein Messwert für eine Temperatur an einer Welle, wie Rotorwelle des Motors, Bremsrotor, eintreibende oder abtreibende Welle eines Getriebes oder einer Getriebestufe, zeitweise gemessen wird,
und dass dieser Messwert bei der Steuerung und Regelung des Motors durch den Umrichter verwendet wird und/oder dieser Messwert über ein Bussystem an mindestens einen weiteren Busteilnehmer übermittelbar ist oder mindestens zeitweise übermittelt wird zur Auslösung von Aktionen oder Verwendung in Steuer- und Regelverfahren

11. Steuer- und Regelverfahren nach mindestens einem der vorangegangenen Ansprüche,
**dadurch gekennzeichnet, dass**
eine elektromagnetisch betätigbare Bremse in den Elektromotor (4) integriert oder an ihn anmontiert ist,
und dass ein Messwert für eine Temperatur an einem drehenden Teil der Bremse, wie Bremsrotor, Bremsbelagträger oder Bremsbelag, zeitweise gemessen wird,
und dass dieser Messwert bei der Steuerung und Regelung des Motors durch den Umrichter verwendet wird und/oder dieser Messwert über ein Bussystem an mindestens einen weiteren Busteilnehmer übermittelbar ist oder zeitweise übermittelt wird zur Auslösung von Aktionen oder Verwendung in Steuer- und Regelverfahren

12. Steuer- und Regelverfahren nach mindestens einem der vorangegangenen Ansprüche,
**dadurch gekennzeichnet, dass**
am Elektromotor (4) A-seitig mindestens ein Getriebe anmontiert ist,
und dass ein Messwert für eine, mindestens einen Oberflächenbereich verformende und somit Oberflächenspannung erzeugende Belastung mindestens eines Zahnes der Verzahnung eines Getriebes oder einer Getriebestufe zeitweise gemessen wird,
und dass dieser Messwert bei der Steuerung und Regelung des Motors durch den Umrichter verwendet wird und/oder dieser Messwert über ein Bussystem an mindestens einen weiteren Busteilnehmer übermittelbar ist oder mindestens zeitweise übermittelt wird zur Auslösung von Aktionen oder Verwendung in Steuer- und Regelverfahren

13. Vorrichtung zum Steuern und Regeln eines Elektromotors (4), der von einem Umrichter versorgt wird, weicher mit feldorientierter Regelung betreibbar ist,
wobei der Umrichter eine Gleichrichtereinheit (2), einen Zwischenkreis eine Endstufe (3) und eine Steuereinheit (5) umfasst,
wobei an den Elektromotor (4) ein relativ oder absolut messender Winkellagengeber (24) anmontiert ist, der mit dem Umrichter elektrisch verbunden ist,
wobei die Vorrichtung Mittel zum mindestens näherungsweise Messen eines Motorstroms oder dem Motorstrom entsprechende Werte aufweist, welche Werte von der Steuereinheit (5) verwendet werden,
wobei die Vorrichtung Mittel zum Bestimmen der Rotortemperatur des Elektromotors (4) aufweist, welche Rotortemperatur von der Steuereinheit beim Steuern des Motors verwendet wird,
wobei die Vorrichtung Mittel zum Bestimmen des Rotorwiderstandes aus der Rotortemperatur aufweist, welcher Rotorwiderstand zur Regelung des Motors berücksichtigt wird,
**dadurch gekennzeichnet, dass**
die Vorrichtung aufweist:
- einen drahtlos abfragbaren Oberflächenwellensensors, der sich an der Welle eines an den Elektromotor (4) anmontierten Getriebe befindet, mittels dem ein Messwert für Temperatur, Drehmoment oder Torsion gemessen wird,
- einen drahtlos abfragbaren Oberftächenwellensensors, der sich am Rotor des Elektromotors befindet, um dessen Temperatur zu messen,
- einen zwischen Motor-Innenraum und Getriebe-Innenraum angeordneten Durchlass und nur eine gemeinsame Antenne zum Empfangen, der von den Oberflächenwellensensoren gesendeten elektromagnetischen Wellen, wobei der Durchlass derart ausgeführt ist, dass Radarwellen sich zwischen Motor-Innenraum und Getriebe-Innenraum ausbreiten können

14. Vorrichtung nach Anspruch 13,
**dadurch gekennzeichnet, dass**
an einem drehenden Teil des Elektromotors (4), eines A-seitig anmontierten Getriebes oder einer B - seitig integrierten oder anmontierten Bremse ein Oberflächenwellensensor zur Messung mindestens einer physikalischen Größe, wie Temperatur, Drehmoment oder dergleichen, angebracht ist, wobei der Oberflächenwellensensor eine erste Antenne zum Empfang und zum Senden elektromagnetischer Strahlung umfasst, insbesondere also eine Vorrichtung mit erster Antenne und piezoelektrischem Wandler (42),
und dass eine relativ zum Gehäuse, insbesondere des Motors oder Getriebes, ruhende zweite Antenne zum Empfang und zum Senden elektromagnetischer Strahlung ausgebildet ist

15. Vorrichtung nach einem der Ansprüche 13 bis 14,
**dadurch gekennzeichnet, dass**
eine elektronische Schaltung im oder auf dem Klemmenkasten des Elektromotors (4) integriert oder angebracht ist, die derart gestaltet ist, dass die von der Antenne empfangene und/oder gesendete elektromagnetische Strahlung moduliert und/oder demoduliert und weitergeleitet und/oder verarbeitet wird

16. Vorrichtung nach einem der Ansprüche 13 bis 15,
**dadurch gekennzeichnet, dass**
der Umrichter derart gestaltet ist, dass eines der Steuerverfahren 1 bis 12, insbesondere in seiner Steuereinheit, ausführbar ist.

17. Vorrichtung nach einem der Ansprüche 13 bis 16,
**dadurch gekennzeichnet, dass**
der Oberflächenwellensensor zeitweise elektromagnetische Strahlung empfängt, in Oberflächenwellen wandelt, die Oberflächenwellen zumindest einmal reflektiert und zeitweise Oberflächenwellen mindestens mittelbar in elektromagnetische Strahlung wandelt, wobei die Oberflächenwellen temperaturabhängig unterschiedliche Eigenschaften, insbesondere temperaturabhängig Geschwindigkeiten, aufweisen.

18. Vorrichtung nach einem der Ansprüche 13 bis 17,
**dadurch gekennzeichnet, dass**
der Elektromotor ein Asynchronmotor oder ein Synchronmotor ist.

## Claims

1. A method of controlling and regulating an electric motor (4) which is supplied by an inverter which is operated with field-orientated regulation,
wherein the inverter comprises a rectifier unit (2), an intermediate circuit, an end stage (3) and a control unit (5),
and wherein an angle-position transducer (24) measuring in a relative or absolute manner is mounted on the electric motor (4),
wherein a motor current is measured at least by approximation or values corresponding to the motor current are measured and are used by the control unit (5),
wherein the rotor temperature of the electric motor (4) is determined and is used by the control unit while the motor is controlled,
wherein the rotor resistance, which is determined from the rotor temperature, is taken into consideration in order to regulate the motor,
wherein a gear mechanism comprising a shaft and/or a brake comprising a brake rotor is or are mounted on the electric motor (4),
**characterized in that**
- the rotor temperature of the electric motor (4) is determined by means of a surface-wave sensor provided on the said rotor and capable of being interrogated by wireless,
- a first measurement value for the temperature, torque or torsion is measured on a movable part of the gear mechanism, in particular the shaft, by means of a surface-wave sensor provided on the shaft and capable of being interrogated by wireless, or a measurement value for the temperature, torque or torsion is measured on a movable part of the brake, in particular on the brake rotor, by means of a surface-wave sensor provided on the brake rotor and capable of being interrogated by wireless,
- the first measurement value is used by the control unit (5) while the motor is controlled, in order to initiate actions, such as an emergency switch-off or regulated shutting down,
- wherein only one common aerial is provided for receiving the electromagnetic waves emitted by the surface-wave sensors,
and a passage is formed between the inner space for the motor and the inner space for the gear mechanism in such a way that the electromagnetic waves provided in the form of radar waves can spread out between the inner space for the motor and the inner space for the gear mechanism.

2. A method of control and regulation according to Claim 1, **characterized in that** electromagnetic waves are used in order to transmit the information on a measurement value of the respective physical quantity from the rotating part to the stationary part such as the stator, the housing, the bearing, the terminal box or the like, and back.

3. A method of control and regulation according to at least one of the preceding Claims, **characterized in that** the measurement value is capable of being transmitted by way of a bus system to at least one further bus participant or is transmitted at least intermittently in order to initiate actions or for use in methods of control and regulation, and/or the measurement value from the further bus participant is used in order to regulate the motor or other appliances.

4. A method of control and regulation according to at least one of the preceding Claims, **characterized in that** in the region of the rotating part electromagnetic radiation is converted intermittently at least indirectly into acoustic surface waves, and/or acoustic surface waves are converted intermittently at least indirectly into electromagnetic radiation.

5. A method of control and regulation according to at least one of the preceding Claims, **characterized in that** the electromagnetic waves have at least one frequency, in particular a base frequency or a carrier frequency, in common with the acoustic surface waves.

6. A method of control and regulation according to at least one of the preceding Claims, **characterized in that** a sensor or an apparatus, which receives electromagnetic radiation intermittently, converts it into surface waves, reflects the surface waves at least once and converts surface waves intermittently at least indirectly into electromagnetic radiation, is attached to the rotating part, wherein the surface waves have properties differing in a manner dependent upon the temperature, in particular speeds dependent upon the temperature.

7. A method of control and regulation according to at least one of the preceding Claims, **characterized in that** a measurement value for a temperature at the rotor is detected in particular in the region of the rotor cage of the asynchronous motor, and a conclusion is drawn from the measurement value of the temperature on the ohmic resistance of electrical conductors of the rotor and the said resistance is taken into consideration in the calculation of the torque, wherein measurement values of the motor current are also taken into consideration.

8. A method of control and regulation according to at least one of the preceding Claims, **characterized in that** at least one gear mechanism, which comprises at least one gear stage which is constructed in the form of an adjustment gear mechanism or a friction-wheel gear mechanism, is mounted on the electric motor (4) on the A side, wherein the said gear stage comprises at least two gear wheels, in particular a friction cone and a bearing ring in contact with the latter,
and a measurement value for a temperature at the gear wheel is detected at least intermittently in the region of the friction contact,
and the said measurement value is used in the control and regulation of the motor by the inverter in particular in order to reduce the rotational speed to zero or another value and/or the said measurement value is capable of being transmitted by way of a bus system to at least one further bus participant or is transmitted intermittently in order to initiate actions or use in methods of control and regulation.

9. A method of control and regulation according to at least one of Claims 1 to 6, **characterized in that** at least one gear mechanism, which comprises at least one gear stage comprising toothed wheels, in particular a spur-gear stage comprising at least two involute toothed wheels or a bevel-gear stage comprising at least one bevel gear, is mounted on the electric motor (4) on the A side,
and a measurement value for a temperature at a toothed wheel is detected at least intermittently,
and the said measurement value is used in the control and regulation of the motor by the inverter, in particular in order to reduce the rotational speed to zero or another value, and/or the said measurement value is capable of being transmitted by way of a bus system to at least one further bus participant or is transmitted intermittently in order to initiate actions or use in methods of control and regulation.

10. A method of control and regulation according to at least one of the preceding Claims, **characterized in that** at least one gear mechanism is mounted on the electric motor (4) on the A side and/or a brake capable of being actuated electromagnetically is integrated in or is mounted on the electric motor (4) on the B side,
and a measurement value for a temperature is measured intermittently on a shaft, such as a rotor shaft of the motor, brake rotor, input or output shaft of a gear mechanism or a gear-mechanism stage,
and the said measurement value is used in the control and regulation of the motor by the inverter, and/or the said measurement value is capable of being transmitted by way of a bus system to at least one further bus participant or is transmitted at least intermittently in order to initiate actions or use in methods of control and regulation.

11. A method of control and regulation according to at least one of the preceding Claims, **characterized in that** a brake capable of being actuated electromagnetically is integrated in or is mounted on the electric motor (4),
and a measurement value for a temperature is measured intermittently on a rotating part of the brake, such as a brake rotor, a brake-pad support or a brake pad,
and the said measurement value is used in the control and regulation of the motor by the inverter, and/or the said measurement value is capable of being transmitted by way of a bus system to at least one further bus participant or is transmitted intermittently in order to initiate actions or use in methods of control and regulation.

12. A method of control and regulation according to at least one of the preceding Claims, **characterized in that** at least one gear mechanism is mounted on the electric motor (4) on the A side,
and a measurement value for a stressing - deforming at least one surface area and thus producing surface tension - of at least one tooth of the set of teeth of a gear mechanism or a gear-mechanism stage is measured intermittently,
and the said measurement value is used in the control and regulation of the motor by the inverter, and/or the said measurement value is capable of being transmitted by way of a bus system to at least one further bus participant or is transmitted at least intermittently in order to initiate actions or use in methods of control and regulation.

13. An apparatus for controlling and regulating an electric motor (4) which is supplied by an inverter which is capable of being operated with field-orientated regulation,
wherein the inverter comprises a rectifier unit (2), an intermediate circuit, an end stage (3) and a control unit (5),
wherein an angle-position transducer (24), which measures in a relative or absolute manner and which is electrically connected to the inverter, is mounted on the electric motor (4),
wherein the apparatus has means for measuring a motor current at least by approximation or values corresponding to the motor current, which values are used by the control unit (5),
wherein the apparatus has means for determining the rotor temperature of the electric motor (4), which rotor temperature is used by the control unit while the motor is controlled,
wherein the apparatus has means for determining the rotor resistance from the rotor temperature, which rotor resistance is taken into consideration in order to regulate the motor,
**characterized in that**
the apparatus has
- a surface-wave sensor which is capable of being interrogated by wireless and which is arranged on the shaft of a gear mechanism which is mounted on the electric motor (4) and by means of which a measurement value for the temperature, torque or torsion is measured,
- a surface-wave sensor which is capable of being interrogated by wireless and which is arranged on the rotor of the electric motor, in order to measure the temperature of the latter,
- a passage situated between the inner space for the motor and the inner space for the gear mechanism and only one common aerial for receiving the electromagnetic waves emitted by the surface-wave sensors, wherein the passage is designed in such a way that radar waves can spread out between the inner space for the motor and the inner space for the gear mechanism.

14. An apparatus according to Claim 13, **characterized in that** a surface-wave sensor for measuring at least one physical magnitude such as temperature, torque or the like is attached to a rotating part of the electric motor (4), of a gear mechanism mounted on the A side or a brake integrated in or mounted on the B side, wherein the surface-wave sensor comprises a first aerial for receiving and emitting electromagnetic radiation, in particular therefore an apparatus with a first aerial and a piezoelectric converter (42), and a second aerial at rest relative to the housing, in particular the motor or gear mechanism, is designed in order to receive and to emit electromagnetic radiation.

15. An apparatus according to one of Claims 13 to 14, **characterized in that** an electronic circuit is integrated in or mounted on the terminal box of the electric motor (4), and it is designed in such a way that the electromagnetic radiation received and/or emitted by the aerial is modulated and/or demodulated and conveyed further and/or processed.

16. An apparatus according to any one of Claims 13 to 15, **characterized in that** the inverter is designed in such a way that one of the control methods 1 to 12 is capable of being carried out, in particular in its control unit.

17. An apparatus according to any one of Claims 13 to 16, **characterized in that** the surface-wave sensor receives electromagnetic radiation intermittently, converts it into surface waves, reflects the surface waves at least once and converts surface waves intermittently at least indirectly into electromagnetic radiation, wherein the surface waves have properties differing in a manner dependent upon the temperature, in particular speeds dependent upon the temperature.

18. An apparatus according to any one of Claims 13 to 17, **characterized in that** the electric motor is an asynchronous motor or a synchronous motor.

## Revendications

1. Procédé de commande et de régulation pour un moteur électrique (4) qui est alimenté par un variateur de vitesse, lequel fonctionne par régulation vectorielle ou orientée application,
dans lequel le variateur de vitesse comprend une unité de redressement (2), un circuit intermédiaire, un étage final (3) et une unité de commande (5),
et dans lequel un capteur de position angulaire (24) à mesure relative ou absolue est monté sur le moteur électrique (4),
dans lequel un courant de moteur ou des valeurs proportionnelles au courant de moteur sont mesurées au moins approximativement et utilisées par l'unité de commande (5),
dans lequel la température du rotor du moteur électrique (4) est déterminée et utilisée par l'unité de commande pour commander le moteur,
dans lequel il est tenu compte, pour la régulation du moteur, de la résistance du rotor qui est déterminée à partir de la température du rotor,
dans lequel un réducteur comprenant un arbre et/ou un frein comprenant un rotor de frein est/sont monté(s) sur le moteur électrique (4),
**caractérisé en ce que**
- la température du rotor du moteur électrique (4) est déterminée au moyen d'un capteur à ondes de surface interrogeable sans fil prévu sur ce rotor,
- une première valeur de mesure de température, couple ou torsion est mesurée sur une pièce mobile du réducteur, en particulier sur l'arbre, au moyen d'un capteur à ondes de surface interrogeable sans fil prévu sur l'arbre, ou une valeur de mesure de température, couple ou torsion est mesurée sur une pièce mobile du frein, en particulier sur le rotor de frein, au moyen d'un capteur à ondes de surface interrogeable sans fil prévu sur le rotor de frein,
- la première valeur de mesure est utilisée par l'unité de commande (5) lors de la commande du moteur pour déclencher des actions telles qu'arrêt d'urgence ou arrêt contrôlé ou progressif,
- une seule antenne commune étant prévue pour recevoir les ondes électromagnétiques envoyées par les capteurs à ondes de surface et
- un passage entre intérieur du moteur et intérieur du réducteur est réalisé de façon que les ondes électromagnétiques prévues sous forme d'ondes radar puissent se propager entre intérieur du moteur et intérieur du réducteur.

2. Procédé de commande et de régulation selon la revendication 1,
**caractérisé en ce que**
l'on utilise des ondes électromagnétiques pour transmettre l'information d'une valeur de mesure de la grandeur physique respective de la pièce tournante vers la pièce stationnaire telle que stator, carter, palier, boîtier de raccordement ou analogues, et en sens inverse.

3. Procédé de commande et de régulation selon au moins l'une des revendications précédentes,
**caractérisé en ce que**
la valeur de mesure peut être transmise ou est transmise au moins périodiquement via un système de bus à au moins un autre participant au bus en vue de déclencher des actions ou d'être utilisée dans des procédés de commande et de régulation,
et/ou la valeur de mesure est utilisée par l'autre participant au bus pour réguler le moteur ou d'autres appareils.

4. Procédé de commande et de régulation selon au moins l'une des revendications précédentes,
**caractérisé en ce que**
au niveau de la pièce tournante, un rayonnement électromagnétique périodique est converti au moins indirectement en ondes de surface acoustiques et/ou des ondes de surface acoustiques périodiques sont converties au moins indirectement en rayonnement électromagnétique.

5. Procédé de commande et de régulation selon au moins l'une des revendications précédentes,
**caractérisé en ce que**
les ondes électromagnétiques présentent au moins une fréquence, en particulier une fréquence de base ou fréquence porteuse, en commun avec les ondes de surface acoustiques.

6. Procédé de commande et de régulation selon au moins l'une des revendications précédentes,
**caractérisé en ce que**
sur ou contre la pièce tournante est rapporté un capteur ou un dispositif qui reçoit le rayonnement électromagnétique périodique, le convertit en ondes de surface, réfléchit au moins une fois les ondes de surface et convertit les ondes de surface périodiques au moins indirectement en rayonnement électromagnétique, les ondes de surface présentant des propriétés différentes en fonction de la température, en particulier des vitesses différentes en fonction de la température.

7. Procédé de commande et de régulation selon au moins l'une des revendications précédentes,
**caractérisé en ce que**
l'on saisit une valeur de mesure pour une température sur le rotor, en particulier dans la région de la cage du rotor du moteur asynchrone et
l'on déduit de la valeur de mesure de la température la résistance ohmique de conducteurs électriques du rotor et l'on tient compte de cette résistance dans le calcul du couple, en tenant compte aussi de valeurs de mesure du courant de moteur.

8. Procédé de commande et de régulation selon au moins l'une des revendications précédentes,
**caractérisé en ce que**
au moins un réducteur est monté du côté A sur le moteur électrique, lequel réducteur comprend au moins un étage de réducteur qui est conçu comme motovariateur ou réducteur à roue de friction, cet étage de réducteur comprenant au moins deux roues de réducteur, en particulier un cône de friction et une bague de roulement se trouvant en contact avec celui-ci,
et que l'on saisit une valeur de mesure pour une température sur la roue de réducteur au moins périodiquement dans la région du contact frottant,
et que cette valeur de mesure est utilisée lors de la commande et de la régulation du moteur par le variateur de vitesse en particulier pour réduire la vitesse de rotation à zéro ou à une autre valeur et/ou cette valeur de mesure peut être transmise ou est transmise périodiquement via un système de bus à au moins un autre participant au bus en vue de déclencher des actions ou d'être utilisée dans des procédés de commande et de régulation.

9. Procédé de commande et de régulation selon au moins l'une des revendications 1 à 6,
**caractérisé en ce que**
au moins un réducteur est monté du côté A sur le moteur électrique (4), lequel réducteur comprend au moins un étage de réducteur comprenant des roues dentées, en particulier un étage hélicoïdal comprenant au moins deux roues dentées à développante ou un étage conique comprenant au moins une roue conique,
et que l'on mesure au moins périodiquement une valeur de mesure pour une température sur une roue dentée,
et que cette valeur de mesure est utilisée lors de la commande et de la régulation du moteur par le variateur de vitesse en particulier pour réduire la vitesse de rotation à zéro ou à une autre valeur et/ou cette valeur de mesure peut être transmise ou est transmise périodiquement via un système de bus à au moins un autre participant au bus en vue de déclencher des actions ou d'être utilisée dans des procédés de commande et de régulation.

10. Procédé de commande et de régulation selon au moins l'une des revendications précédentes,
**caractérisé en ce que**
au moins un réducteur est monté du côté A sur le moteur électrique (4) et/ou un frein à commande électromagnétique est intégré dans le moteur électrique (4) ou monté sur lui du côté B,
et que l'on mesure périodiquement une valeur de mesure pour une température sur un arbre, comme l'arbre de rotor du moteur, le rotor de frein, l'arbre d'entrée ou de sortie d'un réducteur ou d'un étage de réducteur,
et que cette valeur de mesure est utilisée lors de la commande et de la régulation du moteur par le variateur de vitesse et/ou cette valeur de mesure peut être transmise ou est transmise au moins périodiquement via un système de bus à au moins un autre participant au bus en vue de déclencher des actions ou d'être utilisée dans des procédés de commande et de régulation.

11. Procédé de commande et de régulation selon au moins l'une des revendications précédentes,
**caractérisé en ce que**
un frein à commande électromagnétique est intégré dans le moteur électrique (4) ou monté sur lui,
et que l'on mesure périodiquement une valeur de mesure pour une température sur une pièce tournante du frein, comme le rotor de frein, le support de garniture de frein ou la garniture de frein,
et que cette valeur de mesure est utilisée lors de la commande et de la régulation du moteur par le variateur de vitesse et/ou cette valeur de mesure peut être transmise ou est transmise périodiquement via un système de bus à au moins un autre participant au bus en vue de déclencher des actions ou d'être utilisée dans des procédés de commande et de régulation.

12. Procédé de commande et de régulation selon au moins l'une des revendications précédentes,
**caractérisé en ce que**
au moins un réducteur est monté du côté A sur le moteur électrique (4),
et que l'on mesure périodiquement une valeur de mesure pour une charge déformant une région de la surface et donc produisant une tension superficielle sur au moins une dent de la denture d'un réducteur ou d'un étage de réducteur,
et que cette valeur de mesure est utilisée lors de la commande et de la régulation du moteur par le variateur de vitesse et/ou cette valeur de mesure peut être transmise ou est transmise au moins périodiquement via un système de bus à au moins un autre participant au bus en vue de déclencher des actions ou d'être utilisée dans des procédés de commande et de régulation.

13. Dispositif de commande et de régulation pour un moteur électrique (4) qui est alimenté par un variateur de vitesse, lequel peut fonctionner par régulation vectorielle ou orientée application,
dans lequel un capteur de position angulaire (24) à mesure relative ou absolue, qui est relié électriquement au variateur de vitesse, est monté sur le moteur électrique (4),
lequel dispositif présente des moyens pour mesurer au moins approximativement un courant de moteur ou des valeurs proportionnelles au courant de moteur, lesquelles valeurs sont utilisées par l'unité de commande (5),
lequel dispositif présente des moyens pour déterminer la température du rotor du moteur électrique (4), laquelle température du rotor est utilisée par l'unité de commande pour commander le moteur,
lequel dispositif présente des moyens pour déterminer la résistance du rotor à partir de la température du rotor, de laquelle résistance du rotor il est tenu compte pour réguler le moteur,
**caractérisé en ce que**
le dispositif présente :
- un capteur à ondes de surface interrogeable sans fil qui se trouve sur l'arbre d'un réducteur monté sur le moteur électrique (4), au moyen duquel une valeur de mesure de température, de couple ou de torsion est mesurée,
- un capteur à ondes de surface interrogeable sans fil qui se trouve sur le rotor du moteur électrique pour mesurer sa température,
- un passage disposé entre intérieur du moteur et intérieur du réducteur et seulement une antenne commune pour recevoir les ondes électromagnétiques envoyées par les capteurs à ondes de surface, le passage étant réalisé de façon que des ondes radar puissent se propager entre intérieur du moteur et intérieur du réducteur.

14. Dispositif selon la revendication 13,
**caractérisé en ce que**
un capteur à ondes de surface pour mesurer au moins une grandeur physique telle que température, couple ou analogue est rapporté sur une pièce tournante du moteur électrique (4), d'un réducteur monté du côté A ou d'un frein intégré ou monté du côté B, le capteur à ondes de surface comprenant une première antenne pour recevoir et envoyer un rayonnement électromagnétique, en particulier donc un dispositif avec première antenne et convertisseur piézoélectrique (42),
et qu'une deuxième antenne stationnaire par rapport au carter, en particulier du moteur ou du réducteur, est conçue pour recevoir et envoyer un rayonnement électromagnétique.

15. Dispositif selon l'une des revendications 13 à 14,
**caractérisé en ce que**
un circuit électronique est intégré dans ou monté sur le boîtier de raccordement du moteur électrique (4), lequel circuit électronique est conçu de façon que le rayonnement électromagnétique reçu et/ou envoyé par l'antenne soit modulé et/ou démodulé et retransmis et/ou traité.

16. Dispositif selon l'une des revendications 13 à 15,
**caractérisé en ce que**
le variateur de vitesse est conçu de façon qu'un des procédés de commande 1 à 12 puisse être réalisé, en particulier dans son unité de commande.

17. Dispositif selon l'une des revendications 13 à 16,
**caractérisé en ce que**
le capteur à ondes de surface reçoit un rayonnement électromagnétique périodique, le convertit en ondes de surface, réfléchit au moins une fois les ondes de surface et convertit les ondes de surface périodiques au moins indirectement en rayonnement électromagnétique, les ondes de surface présentant des propriétés différentes en fonction de la température, en particulier des vitesses différentes en fonction de la température.

18. Dispositif selon l'une des revendications 13 à 17,
**caractérisé en ce que**
le moteur électrique est un moteur asynchrone ou un moteur synchrone.
